# EUROPEAN PATENT APPLICATION

(11) **EP 4 292 843 A2**
(43) Date of publication of application: **20.12.2023**
(21) Application number: 23201349.0
(22) Date of filing: 06.03.2019
(51) Int. Cl.: B60H 1/00

(54) **REFRIGERATOR BOX AND METHOD OF TRANSPORTING GOODS**

(30) Priority: 06.03.2018 EP 18305233
(62) Divisional of application: 19708321.5
(71) Applicant: ARKEMA FRANCE, 92700 Colombes (FR)
(72) Inventor: TIETZE, Olaf, 89312 Günzburg (DE)
(74) Representative: Bandpay & Greuter

(57) **Abstract**

The present invention relates to a cooling unit (30) for a transportable refrigerator box (10) having a storage space (24) for storing goods to be transported, the refrigerator box (10) comprising a front wall (12) and an opening (20) opposite the front wall (12), wherein the cooling unit is adapted for being positioned in the storage space (24) and comprises a separation structure (34) adapted for separating a first portion (36) of the storage space between the front wall (12) and the separation structure (34) from a second portion (38) of the storage space between the separation structure (34) and the opening (20); and the cooling unit (30) comprises a first cooling device (32) mounted on the separation structure (34), the first cooling device adapted to cool the first portion (36) of the storage space.

## Description

### FIELD OF THE INVENTION

The present invention relates to a cooling unit for a transportable refrigerator box, in particular mounted on a trailer, having a storage space for storing goods to be transported.

Further, the present invention relates to a refrigerator box, in particular of a truck trailer or a truck.

### BACKGROUND OF THE INVENTION

DE 10 2006 022 510 B4 discloses a container and a cooling device that can be inserted into the container. The container is for packed goods and includes lateral outlet openings for the cooling device.

For transporting dangerous goods on the sea, there exists an international guideline called International Maritime Dangerous Goods Code (IMDG Code). The code contains in particular advice on handling, packaging and stowage.

According to the code for self-reactive substances (class 4.1) identified by UN Nos 3231 to 3240 and organic peroxides (class 5.2) identified by UN Nos. 3111 to 3120, two independent mechanical refrigeration systems or a mechanical refrigeration system and cooling method should be provided for the transport of these products.

Presently, two mechanical refrigeration systems exist for sea containers called reefers. However, for trucks, that are mainly used for road transport where only one cooling device is required, and due to the limited space at the front wall of a truck trailer, only a single mechanical refrigeration system is used. Further available cooling methods use liquid nitrogen or dry ice. However, these coolants are difficult to control and their use is dangerous for the people handling them. Finally, their cooling capacity is too low for highly loaded trucks.

There is a thus need to provide a cooling unit and a refrigerator box that can be used on a vehicle, in particular a trailer of a truck, so as to ensure an efficient and safe temperature control of goods contained in the refrigerator box.

### SUMMARY OF THE INVENTION

The invention provides a cooling unit for a transportable refrigerator box having a storage space for storing goods to be transported, the refrigerator box comprising a front wall and an opening opposite the front wall, wherein the cooling unit is adapted for being positioned in the storage space and comprises a separation structure adapted for separating a first portion of the storage space between the front wall and the separation structure from a second portion of the storage space between the separation structure and the opening; and the cooling unit comprises a first cooling device mounted on the separation structure, the first cooling device being adapted to cool the first portion of the storage space.

Further embodiments may relate to one or more of the following features, which may be combined in any technical feasible combination:
- the separation structure may comprise or be a separation wall;
- the separation structure may comprise a thermally insulating material, in particular polyurethane;
- the first cooling device may be a vapor compression refrigeration device, and preferably the first cooling device may comprise a motor, a compressor and a refrigeration circuit containing a refrigerant, the motor being adapted to drive the compressor and the compressor being adapted to compress the refrigerant in the refrigeration circuit;
- the cooling unit may be adapted for blowing cool air into the first portion of the storage space and for blowing hot air into the second portion of the storage space or out of the refrigerator box;
- the first cooling device may be adapted to be powered by an external electricity supply and/or fuel, and, preferably, the first cooling device may include a combustion engine coupled with a generator for providing electrical energy to the motor driving the compressor;
- the separation structure may comprise a rigid part and flexible sealing lips extending around the rigid part, and, preferably, the rigid part may have a width of between 2.30 m and 2.40 m, and a height of between 2.40 m and 2.55 m;
- the separation structure may comprise fixing devices adapted to removably fix the separation structure to walls of the refrigerator box, wherein the fixing devices are more preferably metal clamps;
- the separation structure may comprise at least one hinge and a door, the hinge linking the door in an articulated manner to a remainder of the separation structure between an open position allowing access from the second portion to the first portion of the storage space, and a closed position in which the first portion is inaccessible from the second portion through the door;
- the separation structure may comprise a vertical axle adapted to be fixed to a floor and to a ceiling of the storage space, the separation structure being adapted to pivot around the vertical axle;
- the separation structure may comprise at least two shoes adapted to respectively receive a fork of a fork lift, the shoes being provided at a lower end of the separation wall.

According to another aspect, the invention provides a transportable refrigeration box preferably for a truck trailer, the refrigerator box having a storage space for storing goods to be transported, the refrigerator box comprising a front wall and an opening opposite the front wall, the refrigerator box further comprising: a cooling unit as described above positioned in the storage space; and optionally, a second cooling device permanently mounted on the refrigerator box, wherein the second cooling device is adapted to cool at least the first portion of the storage space.

Further embodiments may relate to one or more of the following features, which may be combined in any technical feasible combination:
- the opening may be closable by at least one door;
- the cooling unit may be removable;
- the refrigerator box may have a main transporting direction when mounted on a truck trailer, the separation structure being mounted transversal to the transporting direction;
- the ratio of the distance from the separation structure of the cooling unit to the front wall to the distance from the separation structure of the cooling unit to the opening is at least 1, preferably at least 1.5, more preferably at least 2, and even more preferably at least 5;
- the refrigerator box may contain goods which are organic peroxides.

According to another aspect, the invention provides a method of transporting goods, comprising the steps of:
- storing and cooling goods in the refrigerator box described above, and
- transporting the refrigerator box on a truck or truck trailer.

Further embodiments may relate to one or more of the following features, which may be combined in any technical feasible combination:
- the goods may be introduced into the storage space of the refrigerator box before the cooling unit is put into place in the storage space of the refrigerator box;
- the goods may be cooled by the second cooling device, and the first cooling device of the cooling unit may be activated if the second cooling device fails and/or if a sensed temperature in the first portion of the storage space raises above a predefined limit;

- the goods may be organic peroxides;
- the opening of the refrigerator box may be closable by at least one door, and said door may be opened when the first cooling device is activated.

The invention addresses the above need and more particularly provides a cooling unit and a refrigerator box that can be used on a vehicle, in particular a trailer, so as to ensure an efficient and safe temperature control of goods contained in the refrigerator box. The invention more particularly provides efficient and flexible backup cooling.

This is especially useful in the context of sea transport, in view of the isolation of the ship (no maintenance expert on board) and the uncontrolled and sometimes long duration of the journey between two harbors.

### BRIEF DESCRIPTION OF THE DRAWINGS

So that the manner in which the above recited features of the present invention can be understood in detail, a more particular description of the invention, briefly summarized above, may be read by reference to embodiments. The accompanying drawings relate to embodiments of the invention and are described in the following:
**Figure 1** schematically shows a trailer with a mounted cooling unit according to an embodiment;
**Figure 2** schematically shows a top view of a transportable refrigerator box;
**Figure 3** schematically shows a perspective view of an embodiment of the cooling unit;
**Figure 4** shows a front view of the cooling unit of **Figure 3**; and
**Figure 5** shows schematically an embodiment of a cooling device.

### DETAILED DESCRIPTION OF EMBODIMENTS

The invention is now described in more detail and in a non-limiting manner.

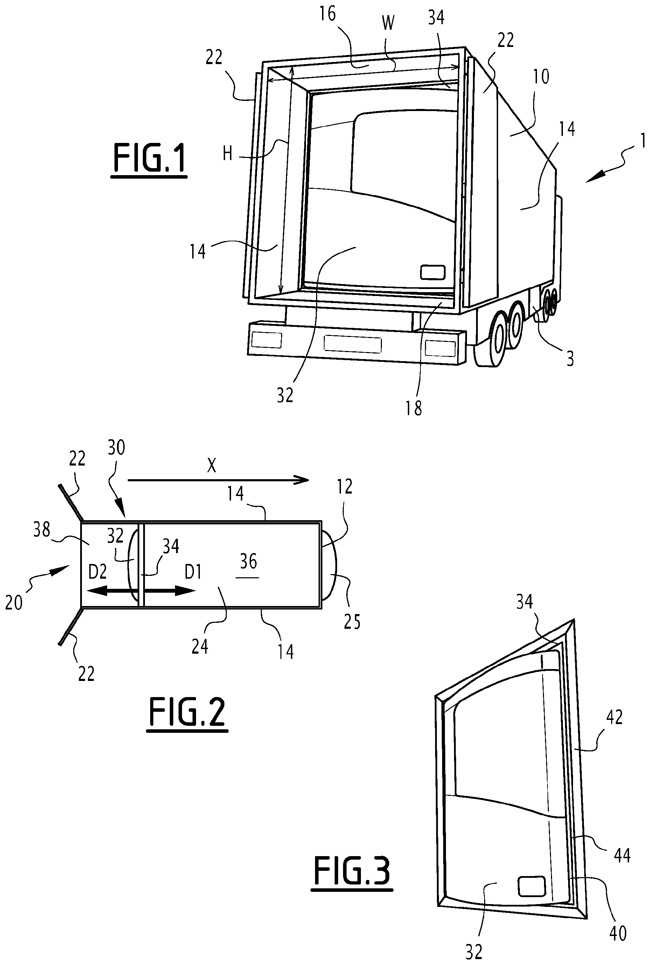

**Figures 1** and **2** schematically show a trailer 1 with a refrigerator box 10 mounted on a truck trailer 3. In other embodiments, the refrigerator box 10 may be mounted on a truck.

The refrigerator box 10 may thus be transported by road on the truck or truck trailer. During at least part of the transport, the refrigerator box 10 on the truck or truck trailer may optionally be transported by sea, *e.g*. on a ferry boat.

The refrigerator box 10 has a main transporting direction X when mounted on a truck trailer 3 or a truck. The refrigerator box 10 has a front wall 12, side walls 14, a ceiling 16 and a floor 18. Further, the refrigerator box 10 preferably has, in transporting direction X opposite to the front wall 12, an opening 20, which is closable by at least one door 22 (preferably two doors 22). The front wall 12, the side walls 14, the ceiling 16, the floor 18 and the closed doors 22 delimit a storage space 24 for storing goods to be transported in a refrigerated manner.

According to examples, the storage space 24 has a size of at least 60 m³, for example more than 65 m³, in particular a width W, transversal to the transporting direction X, of between 2.40 m and 2.50 m, for example between 2.43 m to 2.47 m, a height H of more than 2.50 m, for example 2.65 m, and in particular a lengths, in the transporting direction X, of at least 10 m. In other embodiments, the storage space 24 has a volume of about 30 m³.

According to embodiments, the refrigerator box 10 is insulated, in particular has insulated side walls 14, front wall 12, ceiling 16, floor 18 and/or doors 22. For example the insulated walls are walls having two spaced apart surface layers and insulating material provided between the two surface layers. The insulating material can be any suitable material, for example polyurethane.

According to an embodiment, the goods to be transported in the refrigerator box are dangerous chemical materials such as substances liable to exothermic decomposition, in particular self-reactive substances (class 4.1), for example as identified by UN Nos 3131 to 3140, and organic peroxides (class 5.2), for example as identified by UN Nos. 3111 to 3120.

Although the cooling unit 30 of the invention may be used as a main or sole source of cooling for the refrigerator box 10, it is preferably used as an additional or backup source of cooling.

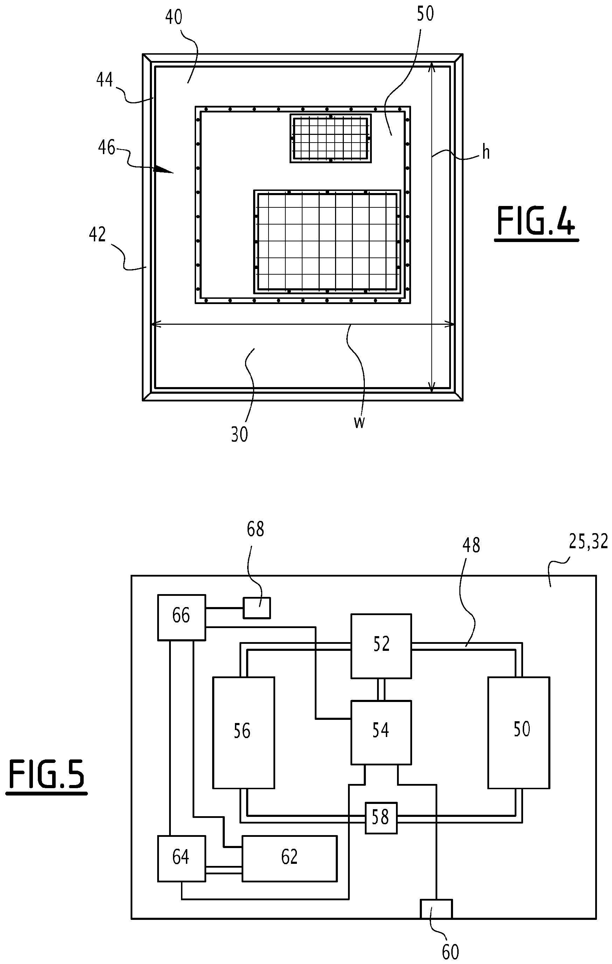

Accordingly, a main cooling device, herein called the second cooling device 25, is preferably provided and is more preferably permanently mounted on the refrigerator box 10, for instance, as illustrated, on the front wall 12. The second cooling device 25, which is preferably a mechanical cooling device, is adapted to cool the storage space 24. According to an embodiment, the second cooling device 25 comprises a vapor compression refrigeration device, which will be explained with respect to **Figure 5**. The second cooling device 25 preferably blows cool air into the storage space 24. Waste heat from the second cooling device 25 is preferably expelled to the ambient air, in the form of hot air blown out of the refrigerator box 10. The second cooling device 25 can be powered by electricity and/or by fuel. The second cooling device 25 preferably has a size adapted to cover, from the outside, at least 60 %, in particular at least 80 % of the surface of the front wall 12. In other embodiments, the second cooling device is mounted on the ceiling 16 or the side walls, in particular in the front portion of the refrigerator box 10.

According to the invention, a cooling unit 30 is provided (preferably for auxiliary, additional and/or backup cooling) comprising a cooling device 32, called herein the first cooling device 32 (preferably a mechanical cooling device) and a separation structure 34. The cooling unit 30 including the separation structure 34 is adapted to be inserted into and positioned in the storage space 24.

For example, the separation structure 34 is a separation wall 34. The separation wall 34 is adapted to thermally insulate a first portion 36 of the storing space 24 from a second portion 38 of the storing space 24. In other words, the separation structure 34 defines a first direction D1 directed towards the first portion 36 and a second direction D2 directed towards the second portion 38 of the storage space 24 and opposite the first direction D1. The first cooling device 32 is thus provided inside the refrigerator box 10. The second portion 38 of the storing space 24 is provided towards the opening 20 of the refrigerator box, which is in particular closable by the doors 22.

When in place, the separation wall 34 may be arranged in such a way that the ratio of the distance to the front wall 12 (length of the first portion 36), relative to the distance to the opening 20 (length of the second portion 38) is at least 1, preferably at least 1.5, more preferably at least 2, and even more preferably at least 3 or at least 5.

The goods to be transported may be inserted into the first portion 36 of the storage space 24 prior to positioning the cooling unit 30 in the refrigerator box 10, so as to then substantially close the first portion 36.

The separation wall 34 may comprise a rigid part 40 and flexible sealing lips 42 provided around the at least a portion of the circumference of the rigid part 40, in particular completely around the rigid part 40. The sealing lips 42 extending outwardly from the rigid part 40. The sealing lips 42 are biased against the walls of the refrigerator box 10, in particular against the side walls 14, the ceiling 16 and/or the floor 18 of the refrigerator box 10. The sealing lips 42 thus seal the space between the rigid part 40 and the inner surfaces of the refrigerator box 10.

According to an embodiment, the separation wall 34, in particular the rigid part 40 of the separation wall 34, comprises two spaced apart surface layers and thermally insulating material provided between the two surface layers. The thermally insulating material can be any suitable material, for example polyurethane foam.

In some embodiments, which may be combined with other embodiments disclosed herein, the rigid part 40 comprises a rigid frame 44, in particular a metal frame 44. The two spaced apart surface layers with the thermally insulating material therein are mounted to the rigid frame 44. Further, the first cooling device 32 is fixed to the rigid frame 44.

The separation wall 34 can be mounted into the storage space 24 of the refrigerator box 10. For that purpose the separation wall 34 has a height and a width that substantially correspond to the height and width of the storage space 24 of the refrigerator box 10. For example, the rigid part 40 has a width w of between 2.30 m and 2.40 m, and a height h of between 2.40 m and 2.55 m. Including the sealing lips 42, the separation wall 34 may have a dimension, when outside the refrigerator box 10, which slightly exceeds the dimensions of the storage space 24 orthogonal to the transporting direction X, in particular the width W and the height H of the storage space 24 of the refrigerator box 10.

The first cooling device 32 may be mounted on one side of the separation wall 34 (facing the opening 20 of the storage space 24). It may e.g. cover at least 60 %, in particular at least 80 % of the surface of the separation wall 12.

The separation wall 34 may be provided with fixing devices (not shown) to removably fix the separation wall 34 to the refrigerator box 10. The fixing devices are for example clamps, screws or the like. In an embodiment, the fixing devices are fixed on the separation wall 34 at the rigid frame 44. The fixing devices may be metal clamps, in particular horizontal metal clamps.

According to an embodiment, the separation wall 34 can be provided with at least one hinge (not shown) to open a part of the separation wall 34, in order to access the first portion 36 of the storage space 24 from the second portion 38.

In another embodiment, the separation wall 34 further comprises a vertical axle adapted to be fixed to the floor 18 and ceiling 16 of the storage space 24. The separation structure 34 may then pivot around the vertical axle to provide access to the first portion 36 of the storage space 24 from the second portion 38.

In another embodiment, the separation wall 34 is provided at its lower end with wheels adapted to roll on the floor 18 of the storage space 24. Thus, the separation wall 34 can be moved within the storage space 24. For example, the wheels may be caster wheels. In other embodiments, the wheels may be retractable and/or lockable. In some embodiments, the wheels are fixed, in particular detachably fixed, to the rigid frame 44.

The separation wall 34 may also be provided with at least two shoes adapted to respectively receive a fork of a fork lift, so that the cooling unit 30 can be put into place in the refrigerator box 10 or removed from the refrigerator box using a fork lift.

As can be seen in **Figure 4**, for providing access for the first cooling device 32 to the first portion 36, the separation wall may include an opening 46.

Each of the first and second cooling devices 25, 32 respectively may have the power to cool substantially the complete storage space 24 to a predefined temperature within a predefined time at a predefined ambient temperature. For example, these cooling devices may respectively have a refrigeration capacity of at least 5000 W, in particular 10000 W, for cooling goods to a setpoint temperature comprised between -20°C and +15°C, at an environmental temperature of for example 20 to 50°C. Setpoint temperatures of -20°C, -15°C, -10°C, -5°C, 0°C, +5°C, +10°C or +15°C may for example be contemplated depending on the goods (for instance depending on the organic peroxide formulations) which are transported.

**Figure 5** schematically shows a cooling device 25, 32. In an embodiment, the cooling device 25, 32 is a vapor compression refrigeration device. However, in some embodiments, one or both cooling devices 25, 32 may be an adsorption or absorption cooling device.

Each cooling device 25, 32 may comprise a circuit 48 for a refrigerant. The refrigerant may pass through an evaporator 50 and a compressor 52, which may be driven by an electric motor 54. The compressor 52 may be adapted to compress the refrigerant in the refrigeration circuit 48. Then, the refrigerant may pass through a condenser 56 and an expansion valve 58 before reaching again the evaporator 50. As can be seen on **Figure 4**, the evaporator 50 of the first cooling device 32 may be arranged in the opening 46 of the separation wall 34. The front wall 12 may have a similar opening for the evaporator of the second cooling device 25.

Respective fans may be provided so as to blow air cooled by the evaporator 50 to the first portion 36 of the storage space 24.

Further, the cooling device 25, 32 may include an electrical power supply connector 60. In an embodiment, the electrical power supply connector 60 is a plug or a socket, so that the cooling device 25, 32 can be connected to an electrical grid, for example on a ship or ferry. For example, the electric grid may be a three-phase grid.

In some embodiments, the cooling device 25, 32 may include a combustion engine 62 mechanically connected to a generator 64, such that the combustion engine 62 drives the generator 64. The generator 64 may provide energy to the electric motor 54 connected to the compressor 52. In other embodiments, the electric motor 54 and the combustion engine 62 are both connected to the compressor 52, such that they can drive the compressor 52, in particular via a gear.

Further, a controller 66 may be provided to control the combustion engine 62, the generator 64 and/or the electric machine 54. According to an embodiment, one or more temperature sensing elements 68 are provided in order to measure the temperature within the first portion 36 and/or the second portion 38 of the storage space 24. Thus, the controller 66 is adapted to control the speed of the electric motor 54 and/or of the combustion engine 62 depending on the refrigerating power requested to achieve a predetermined temperature in the first portion 36 of the storage space 24. It should be noted that the cooling device 25, 32 has in some embodiments only one of the combustion engine 62 and the electric motor 54 to drive the compressor 52.

According to some embodiments, the fuel for the combustion engine 62 is provided through a fuel supply tube, which is inserted into a fuel reservoir (not shown). The fuel reservoir is located outside the storage space 24. In an example, the combustion engine is a diesel engine.

In some embodiments, the first and the second cooling devices 25, 32 are identical. In other embodiments, they may have a different cooling power. However, the cooling power of each of the cooling devices 25, 32 is preferably adapted to cool the complete storage space 24.

When the first cooling device 32 is operated, it cools down the first portion 36 of the storage space 24 and waste heat may be expelled for example to the second portion 38 or directly to the atmosphere. Waste heat may be expelled for example by blowing air heated by the condenser 56 away from the first portion 36 of the storage space owing to fans.

In operation, when the second cooling device 25 of the refrigerator box 10 fails, the second cooling device 25 may emit an alarm. In an alternative embodiment, a temperature sensing element 68 within the first portion 36 may emit an alarm if the temperature rises above a predefined limit. For example, the predefined limit may be from 2°C to 10°C, for example 5°C, above the setpoint temperature.

The first cooling device 32 may then be activated, either automatically or manually.

In order to activate the first cooling device 32, it is generally appropriate or necessary to open the doors 22 of the refrigerator box 10.

According to an embodiment, the first cooling device 32 may then be connected to the electric grid via the electrical power supply connecter 60.

According to another embodiment, or alternatively, the fuel supply tube may then be inserted in a fuel reservoir, which is either the fuel reservoir of the truck or an additional fuel reservoir provided beneath the refrigerator box 10.

The first cooling device 32 may then cool again the goods to the required temperature range.

According to another aspect of the invention, the first cooling device 32 comprises a waste heat fluid discharge element, such as a waste heat air discharge element. The waste heat fluid discharge element is for example a waste heat conduit having an opening directed in the second direction D2 and/or defining a waste heat exhaust flow direction directed in the second direction D2. When the first cooling device cools the first portion 36, the generated waste heat is discharged by the waste heat fluid flowing from the waste heat fluid discharge element in the second direction D2 towards and/or into the second portion 38 of the storage space.

According to the invention it is possible to safely transport temperature sensitive products, in case of normal transport or in case of malfunction or extraordinary conditions of transport. The first and second cooling devices may also simultaneously be used in combination for transport under abnormally harsh transport conditions such as very high ambient temperature.

## Claims

1. A cooling unit (30) for a transportable refrigerator box (10) having a storage space (24) for storing goods to be transported, the refrigerator box (10) comprising a front wall (12) and an opening (20) opposite the front wall (12), wherein the cooling unit is adapted for being positioned in the storage space (24) and comprises a separation structure (34) adapted for separating a first portion (36) of the storage space between the front wall (12) and the separation structure (34) from a second portion (38) of the storage space between the separation structure (34) and the opening (20); and the cooling unit (30) comprises a first cooling device (32) mounted on the separation structure (34), the first cooling device being adapted to cool the first portion (36) of the storage space.

2. The cooling unit (30) according to claim 1, wherein the separation structure (34) comprises or is a separation wall; and/or wherein the separation structure (34) comprises a thermally insulating material, in particular polyurethane.

3. The cooling unit (30) according to one of the preceding claims, wherein the first cooling device (32) is a vapor compression refrigeration device, and preferably the first cooling device (32) comprises a motor (54), a compressor (52) and a refrigeration circuit (48) containing a refrigerant, the motor (54) being adapted to drive the compressor (52) and the compressor being adapted to compress (52) the refrigerant in the refrigeration circuit (48); and preferably wherein the first cooling device (32) is adapted to be powered by an external electricity supply and/or fuel, and, more preferably, the first cooling device (32) includes a combustion engine (62) coupled with a generator (64) for providing electrical energy to the motor (54) driving the compressor (52)

4. The cooling unit (30) according to one of the preceding claims, which is adapted for blowing cool air into the first portion (36) of the storage space and for blowing hot air into the second portion (38) of the storage space or out of the refrigerator box (10).

5. The cooling unit (30) according to one of the preceding claims, wherein the separation structure (34) comprises a rigid part (40) and flexible sealing lips (42) extending around the rigid part (40), the rigid part (40) having preferably a width of between 2.30 m and 2.40 m, and a height of between 2.40 m and 2.55 m; and/or the separation structure (34) comprises fixing devices adapted to removably fix the separation structure (34) to walls of the refrigerator box, wherein the fixing devices are more preferably metal clamps.

6. The cooling unit (30) according to one of the preceding claims, wherein the separation structure (34) comprises at least one hinge and a door, the hinge linking the door in an articulated manner to a remainder of the separation structure between an open position allowing access from the second portion (38) to the first portion (36) of the storage space (24), and a closed position in which the first portion (36) is inaccessible from the second portion (38) through the door; and/or the separation structure (34) comprises a vertical axle adapted to be fixed to a floor (18) and to a ceiling (16) of the storage space (24), and the separation structure is adapted to pivot around the vertical axle.

7. The cooling unit (30) according to one of the preceding claims, wherein the separation structure (34) comprises at least two shoes adapted to respectively receive a fork of a fork lift, wherein the shoes are provided at a lower end of the separation wall (34).

8. A transportable refrigerator box (10), preferably for a truck trailer, the refrigerator box (10) having a storage space (24) for storing goods to be transported, the refrigerator box (10) comprising a front wall (12) and an opening (20) opposite the front wall (12), wherein the refrigerator box (10) further comprises:
a cooling unit (30) according to one of the preceding claims positioned in the storage space (24); and
optionally, a second cooling device (25) permanently mounted on the refrigerator box (10), wherein the second cooling device (25) is adapted to cool at least the first portion (36) of the storage space.

9. The refrigerator box (10) according to claim 12, wherein the opening (20) is closable by at least one door (22); and/or wherein the cooling unit (30) is removable.

10. The refrigerator box (10) according to one of the claims 12 to 14, wherein the refrigerator box has a main transporting direction (X) when mounted on a truck trailer, and wherein the separation structure (34) is mounted transversal to the transporting direction (X).

11. The refrigerator box (10) according to one of the claims 12 to 15, wherein the ratio of the distance from the separation structure (34) of the cooling unit (30) to the front wall (12) to the distance from the separation structure (34) of the cooling unit (30) to the opening (20) is at least 1, preferably at least 1.5, more preferably at least 2, and even more preferably at least 5.

12. A method of transporting goods, preferably organic peroxides, comprising the steps of:
storing and cooling goods in the refrigerator box (10) of one of claims 12 to 17, and transporting the refrigerator box (10) on a truck or truck trailer.

13. The method of claim 18, wherein the goods are introduced into the storage space (24) of the refrigerator box (10) before the cooling unit (30) is put into place in the storage space (24) of the refrigerator box (10).

14. The method of claim 18 or 19, wherein the goods are cooled by the second cooling device (25), and the first cooling device (32) of the cooling unit (30) is activated if the second cooling device (25) fails and/or if a sensed temperature in the first portion (36) of the storage space raises above a predefined limit.

15. The method of one of claims 18 to 21, wherein the opening (20) of the refrigerator box (10) is closable by at least one door (22), and said door (22) is opened when the first cooling device (32) is activated.
